# DEMANDE DE BREVET EUROPEEN

(11) **EP 4 797 129 A1**
(43) Date de publication de la demande: **26.08.2026**
(21) Numéro de dépôt: 25207529.6
(22) Date de dépôt: 08.10.2025
(51) Int. Cl.: G06F 21/32, G06F 9/48, H04L 9/40, H04L 41/046

(54) **SYSTÈME D ORDONNANCEMENT POUR L EXÉCUTION D'UNE OU PLUSIEURS TÂCHES PAR UNE PLURALITÉ DE TERMINAUX BIOMÉTRIQUES**

(30) Priorité: 21.02.2025 FR 2501816
(71) Demandeur: Idemia Public Security France, 92400 Courbevoie (FR)
(72) Inventeur: BOUTIGHANE, Naaman, 92400 Courbevoie (FR)
(74) Mandataire: IPS

(57) **Abrégé**

Système **(400)** d'ordonnancement pour l'exécution d'une ou plusieurs tâches ***Tᵢ*** par une pluralité de terminaux ***Bₙ*** d'identification biométrique, le système **(400)** comprenant :
- un module (401) d'agrégation configuré pour récupérer des fils ***Fⱼ*** d'exécution depuis un module **(402)** d'affectation et agréger une pluralité de fils ***Fⱼ*** d'exécution en paquets ***Qₖ*** de fils ***Fⱼ*** d'exécution, un fil ***Fⱼ*** d'exécution comprend une tâche ***Tᵢ*** dont l'exécution est affectée à un terminal ***Bₙ*** d'identification biométrique ;
- un module **(402)** d'affectation configuré pour affecter une tâche ***Tᵢ*** à la pile ***Pₙ*** d'exécution d'un terminal ***Bₙ*** d'identification biométrique selon un fil ***Fⱼ*** d'exécution, ledit fil ***Fⱼ*** d'exécution étant reçu par ledit module **(402)** d'affectation puis lu par le module (401) d'agrégation, ou lu par ledit module **(402)** d'affectation depuis le registre **(402a)** d'un module **(402)** de registre ;
- un module **(403)** de registre configuré pour récupérer les paquets ***Qₖ*** de fils ***Fⱼ*** d'exécution depuis le module **(401)** d'agrégation et les enregistre dans un registre **(403a)** dans lequel un statut ***Sᵢ*** d'exécution est associé à chaque tâche ***Tᵢ*** des fils ***Fⱼ*** d'exécution ;
- un module **(404)** d'exécution configuré pour écrire des instructions ***Iᵢ*** d'exécution de la tâche ***Tᵢ*** contenue dans la pile ***Pₙ*** d'exécution de chacun desdits terminaux ***Bₙ*** d'identification biométrique, et récupérer le statut ***Sᵢ*** d'exécution desdites tâches ***Tᵢ*** par les terminaux ***Bₙ*** d'identification biométrique ;
- un module **(405)** de contrôle configuré pour récupérer les statuts ***Sᵢ*** d'exécution des tâches ***Tᵢ*** depuis le module **(404)** d'exécution et mettre à jour les statuts ***Sᵢ*** d'exécution des tâches ***Tᵢ*** dans le registre **(402a)** du module **(403)** de registre.

## Description

### Domaine technique

La présente invention concerne un système d'ordonnancement pour l'exécution d'une ou plusieurs tâches par une pluralité de terminaux biométriques, et une installation de contrôle biométrique d'accès mettant en œuvre ledit système.

### Arrière-plan technique

Il est courant de recourir à des protocoles d'identification et/ou d'authentification des individus fondés sur la comparaison de certaines de leurs caractéristiques biométriques afin de les autoriser à accéder à une ou plusieurs zones d'accès restreint. Ces protocoles sont mis en en œuvre par des systèmes de contrôle d'accès disposés à l'entrée de ces zones. Ces systèmes comprennent des terminaux d'identification biométrique reliés à des dispositifs de portes physiques dont l'ouverture ou la fermeture sont conditionnées par la réussite ou l'échec d'opérations d'identification ou d'authentification réalisées par les terminaux d'identification biométrique sur les individus qui s'y présentent.

Les terminaux d'identification biométrique sont munis de dispositif d'acquisition d'une ou plusieurs caractéristiques biométriques selon le type de protocole d'identification et/ou d'authentification qu'ils mettent en œuvre. Ces caractéristiques biométriques sont généralement choisies parmi les dermatoglyphes d'un ou plusieurs doigts, les dermatoglyphes palmaires, un ou plusieurs iris, ou un visage, ou leur combinaison.

Une authentification ou une identification n'est généralement pas mise en œuvre sur les données brutes directement issues de l'acquisition des caractéristiques biométriques, mais sur des données biométriques qui en sont dérivées par suite de l'application d'un traitement algorithmique appelé encodage. Selon la section 3.21 de la norme ISO/IEC 19794-1:2011 Information technology - Biometric data interchange formats - Part 1: Framework, les données biométriques dérivées constituent un « gabarit biométrique » ou « modèle biométrique » qui est distinct des données brutes dont il est issu. Il peut être comparé à d'autres gabarits biométriques.

Une authentification biométrique consiste généralement à comparer un gabarit biométrique d'épreuve acquis pour un individu à un seul ou un nombre très limité de gabarits biométriques de référence (1:1). Ce type de protocole permet à un utilisateur qui souhaite accéder à une zone d'accès restreint de prouver son identité à l'aide d'une ou plusieurs caractéristiques biométriques.

L'identification consiste en la comparaison d'un gabarit biométrique d'épreuve avec de nombreux autres gabarits biométriques de référence préalablement acquis auprès de plusieurs individus (1:N) et généralement stockés dans une base de données. Ce type de protocole permet d'identifier un utilisateur parmi un ensemble d'utilisateurs.

L'exploitation d'un protocole d'authentification ou d'identification requiert généralement une étape préalable d'enrôlement par lequel un utilisateur s'identifie en partageant un certain nombre d'informations relatives à son identité auprès de l'entité qui implémente le protocole.

Au sein d'une entité gestionnaire ou propriétaire, telle qu'une société ou un groupe de sociétés commerciales ou industrielles, ou encore une administration publique, plusieurs dizaines ou centaines de systèmes de contrôle d'accès, et donc plusieurs dizaines ou centaines de terminaux d'identification biométrique, peuvent être requis selon la taille et le nombre de zones d'accès restreint gérées. Ces zones d'accès peuvent être réparties sur des sites géographiques différents, par exemple sur un ou plusieurs établissements situés dans des régions différentes du monde.

Les terminaux d'identification biométrique sont généralement exploités par l'entité gestionnaire ou propriétaire pour contrôler l'accès des zones d'accès restreintes par tout ou partie de son personnel. Ce personnel peut être constitué de plusieurs dizaines, voire centaines ou encore milliers de personnes. L'accès à certaines zones d'accès restreint peut également être autorisé qu'à certaines personnes habilitées du personnel, les terminaux d'identification biométrique étant alors configurés pour identifier uniquement les personnes habilitées.

Les terminaux d'identification biométrique sont généralement distribués au sein d'un réseau informatique de l'infrastructure informatique propre à l'entité qui les exploite. Ils sont en communication avec un ou plusieurs serveurs distants sur lesquels sont installés un programme informatique ou plusieurs modules de programme informatique permettant des opérations centralisées pour leur gestion, leur configuration et leur maintenance. Les opérations de gestion, de configuration et de maintenance sont distinguées des opérations d'identification ou d'authentification qui peuvent être exécutées par les terminaux eux-mêmes et/ou par un ou plusieurs serveurs de calcul dédiés. A titre d'exemples, les opérations de gestion et maintenance peuvent être la mise à jour des bases de données biométriques des utilisateurs, tel que leurs gabarits biométriques de référence, dans tout ou partie des terminaux, une mise à jour du micrologiciel des terminaux, la modification de leurs paramètres de configuration, une mise à jour de leurs protocoles de chiffrement des communications, ou encore la récupération de leurs données de journalisation.

Il est courant de régir l'exécution des opérations de gestion et de maintenance des terminaux dans une infrastructure informatique à l'aide de systèmes d'ordonnancement sur lesquels sont exécutés des programmes informatiques impliquant des schémas d'exécution en multithreading, des structures de données telles des listes et des files d'attente, et des primitives de synchronisation des threads de type mutuelle exclusion (« mutex »). Toutefois, il a été constaté que les performances de ces systèmes d'ordonnancement se dégradent très rapidement dès lors que le nombre de terminaux d'identification biométrique à gérer devient important, notamment lorsqu'il atteint plusieurs centaines. Ces systèmes sont alors affectés de ralentissements importants avec des usages excessifs de leurs unités de traitement ou processeurs (CPU) et des interblocages (« deadlocks »), notamment lors des opérations de gestion et de maintenance à haute fréquence et en temps réel.

Bien qu'il soit toujours possible d'augmenter la puissance et le nombre des processeurs, ainsi que la taille des mémoires de stockage transitoire et non-transitoire, ces solutions ne sont pas recommandées en raison de leurs coûts matériels et de leur consommation énergétique.

### Résumé de l'invention

Un premier aspect de l'invention concerne un système d'ordonnancement pour l'exécution d'une ou plusieurs tâches ***Tᵢ*** par une pluralité de terminaux ***Bₙ*** d'identification biométrique. Le système comprend :
- un module d'agrégation configuré pour récupérer des fils ***Fⱼ*** d'exécution depuis un module d'affectation et agréger une pluralité de fils ***Fⱼ*** d'exécution en paquets ***Qₖ*** de fils ***Fⱼ*** d'exécution, un fil ***Fⱼ*** d'exécution comprend une tâche ***Tᵢ*** dont l'exécution est affectée à un terminal ***Bₙ*** d'identification biométrique ;
- un module d'affectation configuré pour affecter une tâche ***Tᵢ*** à la pile ***Pₙ*** d'exécution d'un terminal ***Bₙ*** d'identification biométrique selon un fil ***Fⱼ*** d'exécution, ledit fil ***Fⱼ*** d'exécution étant reçu par ledit module d'affectation puis lu par le module d'agrégation, ou lu par ledit module d'affectation depuis le registre d'un module de registre ;
- un module de registre configuré pour récupérer les paquets ***Qₖ*** de fils ***Fⱼ*** d'exécution depuis le module d'agrégation et les enregistre dans un registre dans lequel un statut ***Sᵢ*** d'exécution est associé à chaque tâche ***Tᵢ*** des fils ***Fⱼ*** d'exécution ;
- un module d'exécution configuré pour écrire des instructions ***Iᵢ*** d'exécution de la tâche ***Tᵢ*** contenue dans la pile ***Pₙ*** d'exécution de chacun desdits terminaux ***Bₙ*** d'identification biométrique, et récupérer le statut ***Sᵢ*** d'exécution desdites tâches ***Tᵢ*** par les terminaux ***Bₙ*** d'identification biométrique ;
- un module de contrôle configuré pour récupérer les statuts ***Sᵢ*** d'exécution des tâches ***Tᵢ*** depuis le module d'exécution et mettre à jour les statuts ***Sᵢ*** d'exécution des tâches ***Tᵢ*** dans le registre du module de registre.

Selon certains modes de réalisation, le module de registre est configuré pour organiser les tâches ***Tᵢ*** des paquets ***Pₖ*** de fils ***Fⱼ*** d'exécution et les terminaux ***Bₙ*** d'identification biométrique auxquels ces tâches ***Tᵢ*** sont affectées en, respectivement, une file {***Tᵢ***} d'attente des tâches ***Tᵢ*** et une file {***Bₙ***} d'attente des terminaux ***Bₙ*** d'identification biométrique, une fonction ***G*1** d'association associe les des tâches ***Tᵢ*** de la file {***Tᵢ***} d'attente des tâches ***Tᵢ*** aux terminaux ***Bₙ*** d'identification biométrique de la file {***Bₙ***} d'attente des terminaux ***Bₙ*** d'identification biométrique.

Selon certains modes de réalisation, le module de contrôle est en outre configuré pour mettre à jour les statuts ***Sᵢ*** d'exécution à l'aide d'une fonction ***G*2** d'association d'une valeur ***V*** représentative d'un statut ***Sᵢ*** d'exécution à une tâche ***Tᵢ*** affectée à un terminal ***Bᵢ*** d'identification biométrique.

Selon certains modes de réalisation, les accès en lecture et écriture des structures de données partagées de chacun des modules du système sont régulés à l'aide de sémaphores de lecture et d'écriture.

Selon certains modes de réalisation, le module d'affectation et le module d'exécution sont configurés pour être exécutés de manière asynchrone.

Selon certains modes de réalisation, le module d'exécution est configuré pour transmettre les instructions ***Iᵢ*** d'exécution en parallèle à chacun de terminaux ***Bₙ*** d'identification biométrique et/ou récupérer le statut ***Sᵢ*** d'exécution de chaque tâche ***Tᵢ*** par les terminaux ***Bₙ*** d'identification biométrique.

Selon certains modes de réalisation, les instructions ***Iᵢ*** d'exécution sont écrites en parallèle selon un schéma de multithreading logiciel.

Selon certains modes de réalisation, le module d'affectation est en outre configuré pour recevoir un fil ***Fⱼ*** d'exécution transmis par un module d'instruction.

Selon certains modes de réalisation, chacun des modules du système est configuré pour être exécuté en parallèle selon un schéma de multithreading logiciel et/ou matériel.

Un deuxième aspect de l'invention concerne une installation de contrôle biométrique d'accès comprenant :
- une pluralité de terminaux ***Bₙ*** d'identification biométrique ;
- un système **400** d'ordonnancement d'exécution d'une ou plusieurs tâches ***Tᵢ*** par la pluralité de terminaux ***Bₙ*** d'identification biométrique selon l'un quelconque mode de réalisation du premier aspect de l'invention.

Une installation selon le deuxième aspect de l'invention peut être avantageusement utilisée pour contrôler l'accès à une zone ou à une pluralité de zones à accès restreint.

### Brève description des dessins

**Fig. 1** est une représentation schématique d'un ensemble de systèmes de contrôle d'accès à un établissement.
**Fig. 2** est une représentation schématique d'une infrastructure informatique pour la gestion, la configuration et la maintenance d'un ensemble de systèmes de contrôle d'accès.
**Fig. 3** est une représentation schématique de la structure matérielle d'un dispositif de traitement de données.
**Fig. 4** est un diagramme de contexte d'un système d'ordonnancement conformément à l'invention.

### Description détaillée des modes de réalisation

Dans le cadre de la présente divulgation, les modes de réalisation sont décrits dans le contexte général d'un ou plusieurs matériels, dispositifs ou systèmes capables d'exécuter des instructions préchargées telles que, par exemple, des instructions exécutables par ordinateur pour l'exécution de modules de programme. Les modules de programme peuvent comprendre une ou plusieurs routines, programmes, objets, variables, commandes, scripts, fonctions, applications, composants, structures de données qui peuvent exécuter des tâches particulières ou mettre en œuvre des types particuliers de données abstraites.

Certains modes de réalisation peuvent également être mis en oeuvre dans des environnements informatiques distribués où les tâches sont exécutées par des dispositifs distants de traitement de données qui sont reliés par un réseau de communication. Dans un environnement informatique distribué, les modules de programme peuvent se trouver sur des supports de stockage informatique locaux et/ou distants, y compris des dispositifs de stockage mémoire.

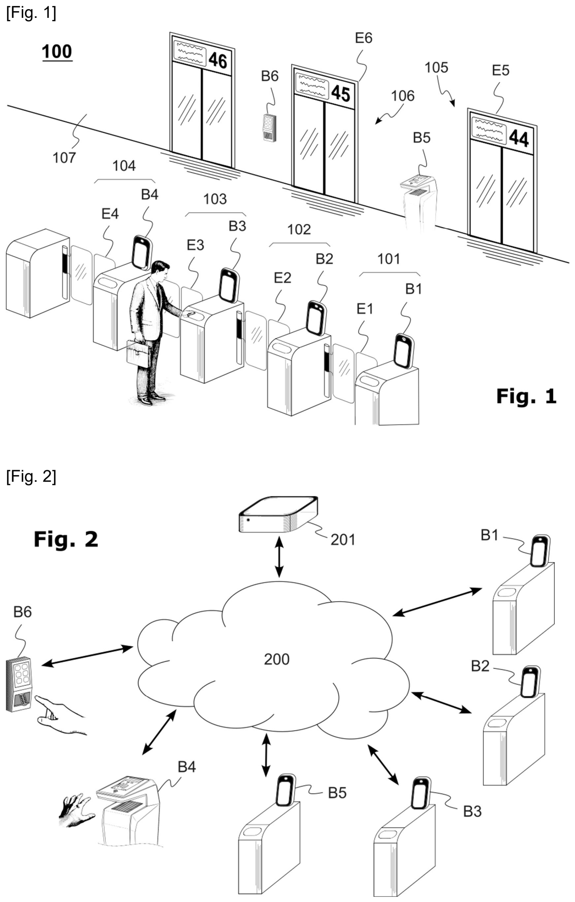

En référence à la **Fig. 1****,** à titre d'exemple, un établissement **107** dont l'accès est réglementé peut être muni d'une installation **100** de contrôle biométrique d'accès comprenant une pluralité de dispositifs **101-106** de contrôle d'accès disposés à chacun de ses accès ou entrées. Chacun de ces dispositifs **101-106** comprennent un terminal ***B*₁₋₆** d'identification biométrique et un dispositif ***E*₁₋₆** de portes physiques dont l'ouverture ou la fermeture sont conditionnées par la réussite ou l'échec d'opérations d'identification ou d'authentification réalisées par le terminal ***B*₁₋₆** d'identification biométrique sur les individus.

Chaque terminal ***B*₁₋₆** d'identification biométrique procède, sur chaque individu qui se présente, à l'acquisition d'une ou plusieurs caractéristiques biométriques sur les à l'aide d'un dispositif d'acquisition (non représenté), génère un gabarit biométrique d'épreuve et compare ledit gabarit biométrique d'épreuve à un ou plusieurs gabarits biométriques de référence d'une base de données. Le type de caractéristiques biométriques acquises généralement choisies parmi les dermatoglyphes d'un ou plusieurs doigts, les dermatoglyphes palmaires, un ou plusieurs iris, ou un visage, ou leur combinaison, selon le type de protocole d'identification et/ou d'authentification que le terminaux ***B*₁₋₆** d'identification biométrique mettent en œuvre. Par exemple, les terminaux ***B*₁₋₆** d'identification biométrique peuvent être des terminaux de reconnaissance faciale (Lo and Chen 2017), de reconnaissance de dactylogrammes digitaux (Trouboul 2020; Fourre et al. 2009; Frye and Grimes 2012) ou de reconnaissance d'iris (Hill 1978; Daugman 1994; Muller, Heacock, and Usher 2006).

En référence à la **Fig. 2****,** les terminaux ***B*₁₋₆** d'identification biométrique des dispositifs **101-106** de contrôle d'accès sont distribués au sein d'un réseau informatique **200** local d'une infrastructure informatique propre à l'établissement **101.** Ils sont notamment en communication filaire ou aérien avec un ou plusieurs serveurs distants **201** sur lesquels sont installés un programme informatique ou plusieurs modules de programme informatique permettant des opérations centralisées de gestion, de configuration et de maintenance. Les moyens et les protocoles de communication entre terminaux ***B*₁₋₆** d'identification biométrique et le ou les serveurs distants **201** sont de tout type adapté et décrits dans l'état de l'art des réseaux informatiques. Sur l'exemple de la **Fig. 2****,** sont représentés des terminaux d'identification biométrique par reconnaissance de dactylogrammes digitaux (**B5, B6**) et par reconnaissance faciale (**B1, B3, B3, B4**).

Le ou les dispositifs de traitement de données, tels que des ordinateurs, sur lesquels le programme informatique ou la pluralité de modules de programme informatique permettant les opérations centralisées de gestion, de configuration et de maintenance forment un système de gestion. Un dispositif de traitement de données est chargé d'exécuter automatiquement des séquences d'opérations arithmétiques ou logiques pour réaliser des tâches ou des actions définies, notamment, sous la forme d'instructions de programme informatique. Un système de gestion peut comprendre un seul dispositif de traitement de données sur lequel le programme informatique ou la pluralité de modules de programme informatique sont exécutés ou plusieurs dispositifs de traitement de données sur lesquels des parties du programme informatique ou les modules de programme informatique sont exécutés. Le ou les modules de programme informatique peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

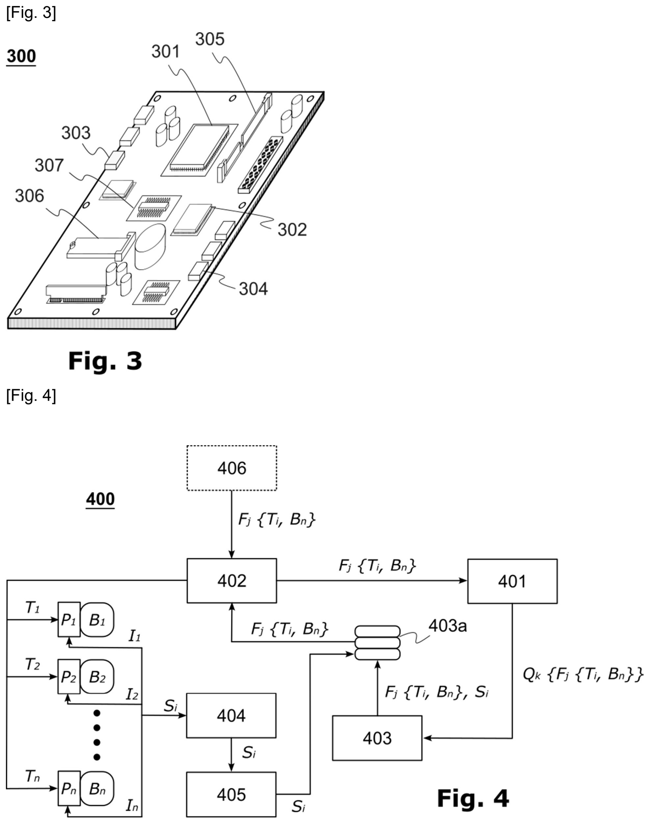

En référence à la **Fig. 3****,** un exemple de dispositif **300** de traitement de données comprend une ou plusieurs unités centrales de traitement (CPU) **301** et/ou un ou plusieurs processeurs graphiques (GPU) **302,** un module physique **303** de communication à distance, un ou plusieurs modules physique **304** d'entrée / sortie pour l'échanges de données avec des dispositifs externes, un support **305** de stockage transitoire tel qu'une mémoire vive (RAM), un support **306** d'enregistrement non-transitoire, et des bus de communication (non représentés) pour le transfert de données entre les composants internes du dispositif. Il peut également comprendre un élément sécurisé **307** pour le stockage de clés cryptographiques, l'exécution d'algorithmes de chiffrement, et/ou le stockage et/ou le chiffrement de tout autre algorithme et/ou donnée dont la sécurité et la confidentialité doit être préservées.

En référence à la **Fig. 4****,** un premier aspect de l'invention concerne un système **400** d'ordonnancement pour l'exécution d'une ou plusieurs tâches ***Tᵢ*** par une pluralité de terminaux ***Bₙ*** d'identification biométrique, le système **400** comprenant :
- un module **401** d'agrégation configuré pour récupérer des fils ***Fⱼ*** d'exécution depuis un module **402** d'affectation et agréger une pluralité de fils ***Fⱼ*** d'exécution en paquets ***Qₖ*** de fils ***Fⱼ*** d'exécution, un fil ***Fⱼ*** d'exécution comprend une tâche ***Tᵢ*** dont l'exécution est affectée à un terminal ***Bₙ*** d'identification biométrique ;
- un module **402** d'affectation configuré pour affecter une tâche ***Tᵢ*** à la pile ***Pₙ*** d'exécution d'un terminal ***Bₙ*** d'identification biométrique selon un fil ***Fⱼ*** d'exécution, ledit fil ***Fⱼ*** d'exécution étant reçu par ledit module **402** d'affectation puis lu par le module **401** d'agrégation, ou lu par ledit module **402** d'affectation depuis le registre **402a** d'un module **402** de registre ;
- un module **403** de registre configuré pour récupérer les paquets ***Qₖ*** de fils ***Fⱼ*** d'exécution depuis le module **401** d'agrégation et les enregistre dans un registre **403a** dans lequel un statut ***Sᵢ*** d'exécution est associé à chaque tâche ***Tᵢ*** des fils ***Fⱼ*** d'exécution ;
- un module **404** d'exécution configuré pour écrire des instructions ***Iᵢ*** d'exécution de la tâche ***Tᵢ*** contenue dans la pile ***Pₙ*** d'exécution de chacun desdits terminaux ***Bₙ*** d'identification biométrique, et récupérer le statut ***Sᵢ*** d'exécution desdites tâches ***Tᵢ*** par les terminaux ***Bₙ*** d'identification biométrique ;
- un module **405** de contrôle configuré pour récupérer les statuts ***Sᵢ*** d'exécution des tâches ***Tᵢ*** depuis le module **404** d'exécution et mettre à jour les statuts ***Sᵢ*** d'exécution des tâches ***Tᵢ*** dans le registre **402a** du module **403** de registre.

En détail, le fonctionnement du système **400** d'ordonnancement fonctionne de la manière suivante. Le module **402** d'affectation reçoit un fil ***Fⱼ*** d'exécution, par exemple, par un module **406** d'instruction tel qu'une interface homme-machine permettant à un opérateur d'instruire une ou plusieurs tâches ***Tᵢ*** dont l'exécution est affectée à un ou plusieurs terminaux ***Bₙ*** d'identification biométrique ou un programme informatique mettant en oeuvre, selon un calendrier ou non, des routines d'instruction d'une ou plusieurs tâches ***Tᵢ*** dont l'exécution est affectée à un ou plusieurs terminaux ***Bₙ*** d'identification biométrique. Dès réception, il affecte la tâche ***Tᵢ*** contenue dans le fil ***Fⱼ*** d'exécution à la pile ***Pₙ*** d'exécution du terminal ***Bₙ*** d'identification biométrique auquel ladite tâche ***Tᵢ*** est associée. Une fois la tâche ***Tᵢ*** ainsi affectée, le fil ***Fⱼ*** d'exécution peut être enregistré dans une mémoire non-transitoire de manière à permettre sa lecture par le module **401** d'agrégation. Ces opérations sont réalisées pour chaque fil ***Fⱼ*** d'exécution reçu. La fréquence de réception et le nombre de fils ***Fⱼ*** d'exécution reçus par le module **402** d'affectation est généralement variable dans le temps. Ils dépendent, par exemple, des besoins et politiques de gestion, de mises à jour et de maintenance des terminaux ***Bₙ*** d'identification biométrique.

Le module **402** d'affectation lit également les fils ***Fⱼ*** d'exécution dans le registre **403a** du module **403** de registre. Dès lors qu'un fil ***Fⱼ*** d'exécution est lu par le module **402** d'affectation, ledit module affecte la tâche ***Tᵢ*** contenue dans le fil ***Fⱼ*** d'exécution à la pile ***Pₙ*** d'exécution du terminal ***Bₙ*** d'identification biométrique auquel ladite tâche ***Tᵢ*** est associée.

Le module **401** d'agrégation récupère les fils ***Fⱼ*** d'exécution du module **402** d'affection, notamment, par exemple, par lecture d'une mémoire non-transitoire sur laquelle le module **402** d'affectation à enregistrer les fils ***Fⱼ*** d'exécution. Ensuite, il agrège les fils ***Fⱼ*** d'exécution en paquets ***Qₖ*** de fils ***Fⱼ*** d'exécution. Les paquets ***Qₖ*** de fils ***Fⱼ*** d'exécution peuvent être enregistrés par le module **401** d'agrégation dans une mémoire non-transitoire de manière accessible en lecture par le module **403** de registre. Grâce au module **401** d'agrégation, le flux de fils ***Fⱼ*** d'exécution en provenance du module **402** d'affectation est temporisé. Les risques de surcharge d'exécution par le module **403** de registre, le module **404** d'exécution, le module **405** de contrôle et les terminaux ***Bₙ*** d'identification biométrique est réduit.

Chaque paquet ***Qₖ*** de fils ***Fⱼ*** d'exécution peut contenir un nombre de fils ***Fⱼ*** d'exécution définie par la fréquence à laquelle les fils ***Fⱼ*** d'exécution sont traitées par le module **402** d'affectation, notamment, par exemple, la fréquence à laquelle le module **402** d'affectation enregistre les fils ***Fⱼ*** d'exécution dans une mémoire non-transitoire accessible au module **401** d'agrégation, et à la fréquence à laquelle le module **401** d'agrégation accède à ladite mémoire. La taille d'un paquet ***Qₖ*** de fils ***Fⱼ*** d'exécution est un paramètre ajustable selon les cas d'usage. A titre d'exemples illustratifs, un paquet ***Qₖ*** peut contenir jusqu'à 200 fils ***Fⱼ*** d'exécution.

Le module **403** de registre récupère les paquets ***Qₖ*** de fils ***Fⱼ*** d'exécution depuis le module **401** d'agrégation, par exemple par lecture d'une mémoire non-transitoire dans laquelle le module **401** d'agrégation les a enregistrés. Les fils ***Fⱼ*** d'exécution contenus paquets ***Qₖ*** sont écrits, par le module **403** de registre, dans un registre **403a,** par exemple une base de données enregistrée dans une mémoire non-transitoire. Un statut ***Sᵢ*** d'exécution est associé à chaque tâche ***Tᵢ*** des fils ***Fⱼ*** d'exécution. A titre d'exemple, la tâche ***Tᵢ*** des fils ***Fⱼ*** d'exécution n'ayant, à ce stade, pas été exécutée par le terminal ***Bₙ*** d'identification biométrique, le statut ***Sᵢ*** peut être un statut de non-exécution tel que « non exécutée » (« not performed ») ou « programmée » (« scheduled »).

La tâche ***Tᵢ*** de chaque fil ***Fⱼ*** d'exécution est affectée à la pile ***Pₙ*** d'exécution du terminal ***Bₙ*** d'identification biométrique à laquelle elle est affectée. Le module **404** d'exécution a pour fonction de procéder à l'exécution de la tâche ***Tᵢ*** ainsi contenue dans la pile ***Pₙ*** d'exécution de chacun des terminaux ***Bₙ*** d'identification biométrique par lesdits terminaux ***Bₙ*** d'identification biométrique. A cette fin, le module **404** d'exécution peut écrire, dans une pile de communication avec les terminaux ***Bₙ*** d'identification biométrique, des instructions ***Iᵢ*** d'exécution de la tâche ***Tᵢ*** contenue dans la pile ***Pₙ*** d'exécution terminaux ***Bₙ*** d'identification biométrique. Ces instructions ***Iᵢ*** d'exécution peuvent être, par exemple, un simple ordre d'exécution, sous forme notamment d'une commande à distance, lorsque les instructions à exécuter par un terminal ***Bₙ*** d'identification biométrique pour accomplir la tâche ***Tᵢ*** qui lui est affectée sont préchargées ou préprogrammées dans une base de données propre à chaque terminal ***Bₙ*** et contenant les instructions à exécuter pour l'accomplissement des toutes les tâches ***Tᵢ*** susceptibles de leur être affectées.

De préférence, les instructions ***Iᵢ*** d'exécution sont programmés selon un schéma de codage en multithreading logiciel pour une gestion en parallèle par le module 404 d'exécution.

Le module **404** d'exécution est également configuré pour récupérer, par exemple par lecture d'une mémoire de registre des terminaux ***Bₙ*** d'identification biométrique, le statut ***Sᵢ*** d'exécution de chaque tâche ***Tᵢ*** par les terminaux ***Bₙ*** d'identification biométrique. Ces statuts ***Sᵢ*** peuvent faire l'objet d'un enregistrement dans une base de données de suivi des statuts stockée dans un mémoire non-transitoire. Des exemples de statut *Sᵢ* d'exécution sont : « réussi » (« done »), « échec » (« fail »), « erreur » (« error ») ou encore « pause » (« hold »).

De préférence, le module **404** d'exécution est configuré pour transmettre les instructions ***Iᵢ*** d'exécution en parallèle à chacun de terminaux ***Bₙ*** d'identification biométrique et/ou récupérer le statut ***Sᵢ*** d'exécution de chaque tâche ***Tᵢ*** par les terminaux ***Bₙ*** d'identification biométrique.

Le module **405** de contrôle récupère les statuts ***Sᵢ*** d'exécution des tâches ***Tᵢ*** depuis le module **404** d'exécution, par exemple par lecture une base de données de suivi des statuts dans laquelle le module **404** d'exécution les a enregistrés. Ensuite, il met à jour les statuts ***Sᵢ*** d'exécution des tâches ***Tᵢ*** dans le registre **402a** du module **403** de registre.

Le module **402** d'affectation, le module **403** de registre ou, de préférence, le module **405** de contrôle est configuré pour supprimer une tâche ***Tᵢ*** affectée à un terminal ***Bₙ*** d'identification biométrique du registre **403a** du module **403** de registre dès lors que l'exécution de ladite tâche ***Tᵢ*** par le terminal ***Bₙ*** d'identification biométrique est réussie, par exemple dès lors que son statut ***Sᵢ*** d'exécution est « réussie ».

A titre de simple exemple illustratif, au sein d'une organisation, les bases locales de données d'utilisateurs des **n** terminaux ***Bₙ*** d'identification biométrique d'une pluralité de **n** dispositifs de contrôle d'accès sont à mettre à jour par ajout d'un nouvel utilisateur avec son gabarit biométrique de référence. Tout d'abord, le module **402** d'affectation reçoit **n** fils ***F*_{*j*=1 à *n*}** d'exécution, chaque fil ***F*_{*j*=1 à *n*}** d'exécution comprend une tâche ***T*_{*i*=*j*}** dont l'exécution est affectée à un terminal ***Bᵢ₌ⱼ*** d'identification biométrique des **n** terminaux ***Bₙ*** d'identification biométrique. La tâche ***Tᵢ*** comprend des instructions à exécuter pour le terminal ***Bᵢ₌ⱼ*** pour la mise à jour de sa base locale de données des utilisateurs. Les instructions consistent à ajouter un nouvel utilisateur à la base locale en récupérant des informations au sujet de ce nouvel utilisateur à partir d'une base de données d'un serveur distant. Les informations du nouvel utilisateur comprennent un identifiant « utilisateur » et un gabarit biométrique de référence associé à cet identifiant « utilisateur ».

Pour chaque fil ***F*_{*j=*1 à *n*}** d'exécution, le module **402** d'affectation affecte la tâche ***Tᵢ₌ⱼ*** à la pile ***Pᵢ₌ⱼ*** d'exécution d'un terminal ***Bᵢ₌ⱼ*** d'identification biométrique, et enregistre ledit fil ***F*_{*j*=1 à *n*}** d'exécution dans une mémoire non-transitoire. Le module **401** d'agrégation récupère les fils ***F*_{*j=*1 à *n*}** d'exécution, par exemple, par lecture de ladite mémoire toutes les 500 millisecondes, puis les agrège en paquets ***Qₖ*** d'un nombre de fils ***Fⱼ*** d'exécution jusqu'à, par exemple, 200 fils ***Fⱼ*** d'exécution.

Le module **403** de registre récupère les paquets ***Qₖ*** d'un nombre de fils ***Fⱼ*** d'exécution et les enregistre dans un registre **403a** dans lequel un statut ***Sᵢ*** d'exécution est associé à chaque tâche ***Tᵢ*** des fils ***Fⱼ*** d'exécution. Dans le présent exemple, puisque les tâches ***Tᵢ*** ne sont pas encore exécutées, le statut ***Sᵢ*** d'exécution est « programmée » (« scheduled »).

Le module **404** d'exécution écrit les instructions ***Iᵢ*** d'exécution de la tâche ***Tᵢ*** de la pile ***Pᵢ*** d'exécution de chaque terminal ***Bᵢ*** d'identification biométrique. Chaque terminal ***Bᵢ*** d'identification biométrique consulte sa pile ***Pᵢ*** d'exécution et exécute les instructions ***Iᵢ*** d'exécution de la tâche ***Tᵢ*** affectée. En l'occurrence, les instructions ***Iᵢ*** d'exécution sont constituées d'un ordre d'exécution de la tâche ***Tᵢ*** dont les instructions sont préchargées dans une base de données propre à chaque terminal ***Bᵢ*** d'identification biométrique. Il s'agit de récupérer, à partir de la base de données du serveur distant, les informations du nouvel utilisateur comprenant un identifiant « utilisateur » et un gabarit biométrique de référence, et de les ajouter dans leur base locale de données d'utilisateurs.

Selon le résultat de l'exécution des instructions ***Iᵢ*** d'exécution, chaque terminal ***Bᵢ*** d'identification biométrique change le statut ***Sᵢ*** d'exécution de la tâche ***Tᵢ* .** A titre d'exemples, si l'exécution est réussie, le statut ***Sᵢ*** d'exécution de la tâche ***Tᵢ*** est modifiée en « succès » (« success ») ; si l'exécution n'est pas réussie, le statut ***Sᵢ*** d'exécution de la tâche ***Tᵢ*** est modifiée en « échec » (« fail ») ; si une erreur est générée, le statut ***Sᵢ*** d'exécution de la tâche ***Tᵢ*** est modifiée en « erreur » (« error ») ; si l'exécution n'est pas encore réalisée, le statut ***Sᵢ*** d'exécution de la tâche ***Tᵢ*** est modifiée en « attente » (« hold ») ; si l'exécution n'est pas réalisée dans le temps imparti, le statut ***Sᵢ*** d'exécution de la tâche ***Tᵢ*** est modifiée en « temporisé » (« time out ») .

Le module **404** d'exécution récupère régulièrement le statut ***Sᵢ*** d'exécution de la tâche ***Tᵢ*** par chacun des terminaux ***Bₙ*** d'identification biométrique. La fréquence à laquelle le module **404** d'exécution récupère les statuts ***Sᵢ*** d'exécution est une question de configuration dépendante notamment des ressources matérielles allouées au système pour son fonctionnement. Ces statuts ***Sᵢ*** peuvent faire l'objet d'un enregistrement dans une base de données de suivi des statuts stockée dans un mémoire non-transitoire.

Le module **405** de contrôle récupère le statut ***Sᵢ*** d'exécution de la tâche ***Tᵢ*** pour chaque terminal ***Bₙ*** d'identification biométrique depuis le module **404** d'exécution, par exemple par lecture de la base de données de suivi des statuts dans laquelle le module **404** d'exécution les a enregistrés. Ensuite, il met à jour les statuts ***Sᵢ*** d'exécution des tâches ***Tᵢ*** dans le registre **402a** du module **403** de registre.

Le module **402** d'affectation, le module **403** de registre ou, de préférence, le module **405** de contrôle est configuré pour supprimer la tâche ***Tᵢ*** affectée à un terminal ***Bₙ*** d'identification biométrique du registre **403a** du module **403** de registre dès lors que l'exécution de ladite tâche ***Tᵢ*** par le terminal ***Bₙ*** d'identification biométrique est réussie, par exemple dès lors que son statut ***Sᵢ*** d'exécution est « réussie ».

Lorsque le statut ***Sᵢ*** d'exécution n'est pas le statut « réussie », la tâche *Tᵢ* affectée au terminal ***Bₙ*** d'identification biométrique est conservée dans le registre **403a** du module **403** de registre et réaffectée audit terminal ***Bₙ*** d'identification biométrique par le module **402** d'affectation.

Selon certains modes de réalisation, le module **402** de registre est configuré pour organiser les tâches ***Tᵢ*** des paquets ***Pₖ*** de fils ***Fⱼ*** d'exécution et les terminaux ***Bₙ*** d'identification biométrique auxquels ces tâches ***Tᵢ*** sont affectées en, respectivement, une file {***Tᵢ***} d'attente des tâches ***Tᵢ*** et une file {***Bₙ***} d'attente des terminaux ***Bₙ*** d'identification biométrique, une fonction ***G*1** d'association associe les des tâches ***Tᵢ*** de la file {***Tᵢ***} d'attente des tâches ***Tᵢ*** aux terminaux ***Bₙ*** d'identification biométrique de la file {***Bₙ***} d'attente des terminaux ***Bₙ*** d'identification biométrique.

L'organisation des terminaux ***Bₙ*** d'identification biométrique en une file {***Bₙ***} d'attente et l'organisation des tâches ***Tᵢ*** affectées en une file {***Tᵢ***} d'attente permettent de simplifier la gestion de l'affectation des tâches ***Tᵢ*** aux terminaux ***Bₙ*** d'identification biométrique. L'organisation en files d'attente permet une meilleure gestion de la répartition des tâches entre les terminaux grâce, notamment, à la possibilité d'implémenter différentes stratégies de priorisation, de redistribution dynamique et de temporisation selon le nombre de tâches à exécuter par un ou plusieurs terminaux et le temps nécessaire à leur exécution. Les avantages sont la réduction du risque d'accumulation simultanée de tâches sur les terminaux et donc de surcharge, la réduction des temps morts, la diminution des risques de collisions de données, et facilité l'ajout de nouvelles tâches et/ou de terminaux.

Selon certaines variantes, les files d'attente peuvent être des files ordonnées selon différents modes de gestion. Des exemples de mode de gestion sont la priorité d'exécution (« priority queue ») - certaines tâches sont plus urgentes, la priorité aux temps d'exécution courts (« shortest job first ») - les tâches dont le temps d'exécution est le plus courts sont exécutées en priorité, la priorité aux premiers (« First In, First Out ») - la première tâche arrivée est la première exécutée.

Selon certains modes de réalisation, le module **405** de contrôle est en outre configuré pour mettre à jour les statuts ***Sᵢ*** d'exécution à l'aide d'une fonction ***G*2** d'association d'une valeur ***V*** représentative d'un statut ***Sᵢ*** d'exécution à une tâche ***Tᵢ*** affectée à un terminal ***Bᵢ*** d'identification biométrique. La valeur ***V*** représentative est de tout type adaptée. Elle peut, par exemple, être une valeur numérique. Chaque valeur est associée à un statut ***Sᵢ*** d'exécution.

Les données, en particulier celles relatives aux tâches ***Tᵢ*,** aux fils ***Fⱼ*** d'exécution, aux piles ***Pₙ*** d'exécution, aux instructions ***Iᵢ*** d'exécution et aux statuts ***Sᵢ*** d'exécution, lorsqu'elles sont stockées dans une base de données et/ou un registre d'un ou plusieurs modules et échangés entre lesdits modules **401, 402, 403, 404, 405** sont organisée selon certaines structures afin d'améliorer leur accès et leur traitement. Ces structures de données conditionnent la manière dont les données sont enregistrées en mémoire, et l'ensemble des opérations ou fonctions qu'il est possible de leur appliquer. Des exemples de structures de données sont les dictionnaires concurrents, les fils concurrents, ou encore les listes.

Les données, en particulier celles relatives aux tâches ***Tᵢ*,** aux fils ***Fⱼ*** d'exécution, aux piles ***Pₙ*** d'exécution, aux instructions ***Iᵢ*** d'exécution et aux statuts ***Sᵢ*** d'exécution, sont des données partagées entre les modules **401, 402, 403, 404, 405** du système **400.** Selon certains modes de réalisation, les accès en lecture et écriture des structures de données partagées de chacun des modules **401, 402, 403, 404, 405** du système **400** sont régulés à l'aide de sémaphores de lecture et d'écriture. Les sémaphores de lecture et d'écriture sont connus dans le domaine des sciences informatiques (E. W. Dijkstra 1968, 1971; Edsger W. Dijkstra 1982; E. W. Dijkstra 1980). Leur implémentation dans le cadre de la présente invention permet de simplifier la gestion des accès en lecture et écriture des structures de données partagées de chacun des modules **401, 402, 403, 404, 405** sans sacrifier aux performances, notamment en termes de vitesse d'exécution.

Selon certains modes de réalisation, le module **402** d'affectation et le module **404** d'exécution sont configurés pour être exécutés de manière asynchrone.

Selon certains modes avantageux de réalisation, chacun des modules **401, 402, 403, 404, 405** du système **400** est configuré pour être exécuté en parallèle selon un schéma de multithreading logiciel et/ou matériel.

Un deuxième aspect de l'invention concerne une installation **100** de contrôle biométrique d'accès comprenant :
- une pluralité de terminaux ***Bₙ*** d'identification biométrique ;
- un système **400** d'ordonnancement d'exécution d'une ou plusieurs tâches ***Tᵢ*** par la pluralité de terminaux ***Bₙ*** d'identification biométrique selon l'un quelconque mode de réalisation du premier aspect de l'invention.

Les accès en lecture et écriture des structures de données partagées des terminaux biométriques avec le module d'exécution peuvent être régulés à l'aide de sémaphores de lecture et d'écriture.

L'installation **100** de contrôle d'accès conformément au deuxième aspect de l'invention peut être avantageusement utilisé pour réglementer l'accès à une zone ou une pluralité de zones à accès restreint, par exemple, d'un site, d'un établissement ou d'un bâtiment.

### Références

Daugman, John G. 1994. Biometric personal identification system based on iris analysis. USPTO 5291560. US Patent, filed July 15, 1991, and issued March 1, 1994.

Dijkstra, E. W. 1968. "A Constructive Approach to the Problem of Program Correctness." BIT Numerical Mathematics 8 (3): 174-86.

-. 1971. "Hierarchical Ordering of Sequential Processes." Acta Informatica 1 (2): 115-38.

-. 1980. "The Superfluity of the General Semaphore.".

Dijkstra, Edsger W. 1982. "A Tutorial on the Split Binary Semaphore." In Theoretical Foundations of Programming Methodology, 555-64. Dordrecht: Springer Netherlands.

Fourre, Joël-Yann, Sylvaine Picard, François Rieul, and Jean-Christophe Fondeur. 2009. Dispositif d'acquisition d'empreintes digitales a la volee. WIPO 2009112717:A1. World Patent, filed February 12, 2009, and issued September 17, 2009.

Frye, Fred, and Michael Grimes. 2012. Method and apparatus for slim type fingerprint recognition device. USPTO 20120014569:A1. US Patent, filed July 18, 2011, and issued January 19, 2012.

Hill, Robert B. 1978. Apparatus and method for identifying individuals through their retinal vasculature patterns. USPTO 4109237. US Patent, filed January 17, 1977, and issued August 22, 1978.

Lo, Peter Zhen-Ping, and Hui Chen. 2017. Facial matching system. USPTO 20170330028:A1. US Patent, filed August 2, 2017, and issued November 16, 2017.

Muller, David, Gregory Heacock, and David Usher. 2006. Method and system for generating a combined retina/iris pattern biometric. USPTO 20060088193:A1. US Patent, filed March 23, 2005, and issued April 27, 2006.

Trouboul, Laurent. 2020. Capteur d'empreintes papillaires à lame mince. INPI FR3095535A1. French Patent Application, filed April 25, 2019, and issued October 30, 2020.

## Revendications

1. Système **(400)** d'ordonnancement pour l'exécution d'une ou plusieurs tâches ***Tᵢ*** par une pluralité de terminaux ***Bₙ*** d'identification biométrique, le système (**400**) comprenant :
- un module (**401**) d'agrégation configuré pour récupérer des fils ***Fⱼ*** d'exécution depuis un module (**402**) d'affectation et agréger une pluralité de fils ***Fⱼ*** d'exécution en paquets ***Qₖ*** de fils ***Fⱼ*** d'exécution, un fil ***Fⱼ*** d'exécution comprend une tâche ***Tᵢ*** dont l'exécution est affectée à un terminal ***Bₙ*** d'identification biométrique ;
- un module (**402**) d'affectation configuré pour affecter une tâche ***Tᵢ*** à la pile ***Pₙ*** d'exécution d'un terminal ***Bₙ*** d'identification biométrique selon un fil ***Fⱼ*** d'exécution, ledit fil ***Fⱼ*** d'exécution étant reçu par ledit module (**402**) d'affectation puis lu par le module (**401**) d'agrégation, ou lu par ledit module (**402**) d'affectation depuis le registre (**402a**) d'un module (**402**) de registre ;
- un module (**403**) de registre configuré pour récupérer les paquets ***Qₖ*** de fils ***Fⱼ*** d'exécution depuis le module (**401**) d'agrégation et les enregistre dans un registre (**403a**) dans lequel un statut ***Sᵢ*** d'exécution est associé à chaque tâche ***Tᵢ*** des fils ***Fⱼ*** d'exécution ;
- un module (**404**) d'exécution configuré pour écrire des instructions ***Iᵢ*** d'exécution de la tâche ***Tᵢ*** contenue dans la pile ***Pₙ*** d'exécution de chacun desdits terminaux ***Bₙ*** d'identification biométrique, et récupérer le statut ***Sᵢ*** d'exécution desdites tâches ***Tᵢ*** par les terminaux ***Bₙ*** d'identification biométrique ;
- un module (**405**) de contrôle configuré pour récupérer les statuts ***Sᵢ*** d'exécution des tâches ***Tᵢ*** depuis le module (**404**) d'exécution et mettre à jour les statuts ***Sᵢ*** d'exécution des tâches ***Tᵢ*** dans le registre (**402a**) du module (**403**) de registre.

2. Système selon la revendication 1, tel que le module (**402**) de registre est configuré pour organiser les tâches ***Tᵢ*** des paquets ***Pₖ*** de fils ***Fⱼ*** d'exécution et les terminaux ***Bₙ*** d'identification biométrique auxquels ces tâches ***Tᵢ*** sont affectées en, respectivement, une file {***Tᵢ***} d'attente des tâches ***Tᵢ*** et une file {***Bₙ***} d'attente des terminaux ***Bₙ*** d'identification biométrique, une fonction ***G*1** d'association associe les des tâches ***Tᵢ*** de la file {***Tᵢ***} d'attente des tâches ***Tᵢ*** aux terminaux ***Bₙ*** d'identification biométrique de la file {***Bₙ***} d'attente des terminaux ***Bₙ*** d'identification biométrique.

3. Système selon l'une quelconque des revendications 1 à 2, tel que le module (**405**) de contrôle est en outre configuré pour mettre à jour les statuts ***Sᵢ*** d'exécution à l'aide d'une fonction ***G*2** d'association d'une valeur ***V*** représentative d'un statut ***Sᵢ*** d'exécution à une tâche ***Tᵢ*** affectée à un terminal ***Bᵢ*** d'identification biométrique.

4. Système selon l'une quelconque des revendications 1 à 3, tel que les accès en lecture et écriture des structures de données partagées de chacun des modules (**401, 402, 403, 404, 405**) du système (**400**) sont régulés à l'aide de sémaphores de lecture et d'écriture.

5. Système selon l'une quelconque des revendications 1 à 4, tel que le module (**402**) d'affectation et le module (**404**) d'exécution sont configurés pour être exécutés de manière asynchrone.

6. Système selon l'une quelconque des revendications 1 à 5, tel que le module (**404**) d'exécution est configuré pour transmettre les instructions ***Iᵢ*** d'exécution en parallèle à chacun de terminaux ***Bₙ*** d'identification biométrique et/ou récupérer le statut ***Sᵢ*** d'exécution de chaque tâche ***Tᵢ*** par les terminaux ***Bₙ*** d'identification biométrique.

7. Système (**400**) selon l'une quelconque des revendications 1 à 6, tel que les instructions ***Iᵢ*** d'exécution sont écrites en parallèle selon un schéma de multithreading logiciel.

8. Système (**400**) selon l'une quelconque des revendications 1 à 6, tel que le module (**402**) d'affectation est en outre configuré pour recevoir un fil ***Fⱼ*** d'exécution transmis par un module (**406**) d'instruction.

9. Système selon l'une quelconque des revendications 1 à 8, tel que chacun des modules (**401, 402, 403, 404, 405**) du système (**400**) est configuré pour être exécuté en parallèle selon un schéma de multithreading logiciel et/ou matériel.

10. Installation (**100**) de contrôle biométrique d'accès comprenant :
- une pluralité de terminaux ***Bₙ*** d'identification biométrique ;
- un système **400** d'ordonnancement d'exécution d'une ou plusieurs tâches ***Tᵢ*** par la pluralité de terminaux ***Bₙ*** d'identification biométrique selon l'une quelconque des revendications 1 à 9.

11. Utilisation d'une installation selon la revendication 10 pour l'accès à une zone ou une pluralité de zones à accès restreint.
